# EUROPEAN PATENT SPECIFICATION

(11) **EP 2 700 738 B1**
(45) Date of publication and mention of the grant of the patent: **04.01.2017**
(21) Application number: 12774353.2
(22) Date of filing: 18.04.2012
(51) Int. Cl.: C25D 15/00, C25D 5/50, C23C 18/16, H01M 8/0206, H01M 8/0208, H01M 8/0228, C25D 3/12, C25D 3/18, C25D 5/18, C23C 18/34, C23C 18/36

(54) **CORROSION-RESISTANT ALLOY COATING FILM FOR METAL MATERIALS AND METHOD FOR FORMING SAME**
BESCHICHTUNGSFILM FÜR METALLMATERIALIEN AUS EINER KORROSIONSBESTÄNDIGEN LEGIERUNG UND VERFAHREN ZU SEINER HERSTELLUNG
FILM DE REVÊTEMENT D'ALLIAGE RÉSISTANT À LA CORROSION POUR MATÉRIAUX MÉTALLIQUES ET SON PROCÉDÉ DE FORMATION

(30) Priority: 19.04.2011 JP 2011092928
(43) Date of publication of application: 26.02.2014
(73) Proprietor: Nihon Parkerizing Co., Ltd., Tokyo 103-0027 (JP)
(72) Inventor: NAKADA, Kazuya, Tokyo 103-0027 (JP); NAKAJIMA, Ryu, Tokyo 103-0027 (JP); KONISHI, Tomoyoshi, Tokyo 103-0027 (JP); BEPPU,Masaaki, Tokyo 103-0027 (JP)
(74) Representative: Hoffmann Eitle
(86) International application number: PCT/JP2012/060449
(87) International publication number: WO 2012/144518

(56) References cited:
- CA-A1- 1 131 947
- JP-A- 6 346 292
- JP-A- 61 034 107
- JP-A- 61 179 900
- JP-A- H09 504 341
- JP-A- H09 504 832
- JP-A- 2005 281 748

## Description

### Technical Field

The present invention relates to a highly corrosion-resistant alloy coating film formed on the surface of an iron base material, a method for forming the film, and a component with the film.

### Background Art

Conventionally, ceramics, austenitic stainless steels, and Ni base alloys such as hastelloy (trademark) and inconel have been adopted for structural materials and mechanical components required to have high corrosion resistance. However, these materials are all extremely expensive, and have problems such as difficulty with processing. On the other hand, various surface treatment methods for improving corrosion resistance have been also developed, which include: wet processes such as chemical conversion treatments (chromate, non-chromate) and plating; and dry processes such as spraying, a PVD method (physical vapor deposition method), and a CVD method (chemical vapor deposition method).

A method of applying a chromate treatment to iron and steel materials subjected to zinc plating has been widely adopted previously as one of specific surface treatment methods. This surface treatment film serves to suppress corrosion progression of iron and steel members through the self-repair function with the elution of hexavalent chromium ions. However, the anti-corrosion effect is generally inferior to those of austenitic stainless steels or Ni base alloys, and furthermore, rapid progress of replacement by non-chromate agents has been triggered by recent environmental regulations.

The prior art with the use of non-chromate agents includes the composition for metal surface treatment, metal surface treatment method, and metallic material disclosed in, for example, Patent Literature 1 (JPA-2007-262577). This is intended to develop a base covering property, coating adhesion, and corrosion resistance by containing organosiloxane having at least two amino groups in one molecule as a polycondensation of organosilane in a zirconium and/or titanium-based composition for metallic surface treatment, and by specifying the content (s) of the zirconium element and/or titanium element, the content of the organosiloxane, the mass ratio of the zirconium element and/or titanium element to the organosiloxane, and the degree of polycondensation, while the corrosion resistance and oxidation resistance of this surface treatment film are not able to be considered adequate under strong acid.

The prior art on an electroplating system includes a method for producing highly corrosion-resistant zinc-cobalt plated steels, which is disclosed in, for example, Patent Literature 2 (JPA H5-179481). This is a production method in which when iron and steel materials are subjected to acid Zn-Co electroplating, the cobalt in an acid plating bath is adjusted to a concentration of 30 to 85 mol% with respect to zinc + cobalt so that the cobalt content in the plating film is 2 to 30 wt%, while the surface treatment film formed is not adequate in terms of acid resistance and oxidation resistance.

In addition, the prior art on an electroless plating system includes an electroless composite plating bath and a plating method which are disclosed in, for example, Patent Literature 3 (JPA H6-65751). This mentions that favorable abrasion resistance and corrosion resistance can be ensured by adding silicon carbide particulates to an electroless plating bath for depositing a nickel-tungsten-phosphorus alloy with the use of metal salts of nickel and tungsten and a hypophosphite as a reductant, and dispersing and co-depositing silicon carbide particulates on the surface of an object to be plated, while durability is inadequate in relatively concentrated mineral acid solutions.

The prior art with the use of a PVD method includes an antimicrobial, antifouling, and corrosion-resistant material disclosed in, for example, Patent Literature 4 (JPA 2004-209389). This relates to an antimicrobial, antifouling, and corrosion-resistant material characterized in that photocatalytic titanium oxides or titanium suboxides are produced and dispersed in at least one form of granular and plate-like shapes at least partially on the surface of and inside an alloy of iron with at least one of carbon, chromium, and nickel added thereto, and a method for the material, and mentions that a titanium alloy can be prepared by PVD methods such as vacuum deposition, sputtering, ion-plating, and ion beam deposition. However, materials formed by this method have long-term inadequate corrosion resistance under strong acid.

The prior art with the use of a CVD method includes a method of forming a silicon diffusion layer or a silicon overlay coating on the surface of a metallic substrate by chemical vapor deposition, which is disclosed in, for example, Patent Literature 5 (JPA H5-132777). This is intended to develop corrosion resistance, gas adsorption performance, resistance to hygroscopicity, etc. through the formation of a silicon diffusion layer or a silicon overlay coating layer on the surface of a metallic substrate, in particular, iron or an iron alloy by chemical vapor deposition. However, there is a possibility that the surface treatment film formed by this method will be easily etched in a special mixed acid solution containing hydrofluoric acid.

Patent Literature 6 discloses an article comprising a heat-resistant alloy covered by a corrosion-protective layer, said layer consisting essentially of a compound material of a base homogeneous alloy processing high-temperature properties and embedded therein heterogeneously distributed islands of discrete elements which form protective oxides and which are at least partially dissolved in solid solution in the base alloy, said corrosion-protective layer being free from boron or boron compounds whereby, during operation of said corrosion-protective layer in an oxidizing environment the oxide-forming elements of the distributed islands are supplied by diffusion into the corrosion-protective layer.

Therefore, there are currently no inexpensive materials that excellent in corrosion resistance, oxidation resistance, and workability for materials and components for use under corrosive environments, in particular, under strong acid, and the development of novel materials has been desired.

### Citation List

### Patent Literature

Patent Literature 1: Japanese Patent Application Laid-Open No. 2007-262577
Patent Literature 2: Japanese Patent Application Laid-Open No. HEI 5-179481
Patent Literature 3: Japanese Patent Application Laid-Open No. HEI 6-65751
Patent Literature 4: Japanese Patent Application Laid-Open No. 2004-209389
Patent Literature 5: Japanese Patent Application Laid-Open No. HEI 5-132777
Patent Literature 6: CA 1 131 947 A1

### Summary of Invention

### Technical Problem

The present invention is intended to solve the problems faced by prior art, and provide a highly corrosion-resistant alloy coating film on the surface of an iron base material by a low-cost and mass-producible simple formation method.

### Solution to Problem

The inventors have completed, as a result of earnest studies carried out on the means for solving the problems, a novel highly corrosion-resistant alloy coating film and a method for forming the film, which solve the problems of the prior art. For the present invention, an attempt and an earnest study have been made to achieve solid solubilization and allying of plating films for the purpose of improvement in corrosion resistance by composite plate processing with a Ni solution using chromium silicide particles and a heat treatment after the composite plate processing.

Many types of conventional composite plate processing have been intended to co-deposit particles in a matrix, and utilize properties of the particles themselves, such as hardness, lubricity, antibacterial property, and color hue, to develop functions. More specifically, the matrix has been considered to include a kind of binder-like element for taking advantage of the properties of the particles. On the other hand, as far as corrosion resistance is concerned, in the case of conventional composite plating films, corrosion often progress at boundaries between the matrix and particles, and there have been no coating films at all which produce adequate corrosion resistance in severe corrosion environments such as under a strong acid. The inventors have significantly changed the idea of conventional composite plate processing, and found that alloy coating films can be formed which are excellent in corrosion resistance. More specifically, the inventors have succeeded in, after the same process of co-depositing particles in a matrix as in the prior art, dramatically improving the properties of the matrix, in particular, the corrosion resistance thereof, by aggressively applying a heat treatment for decomposition and solid solubilization of the particles.

In the present invention, chromium silicide particles are used which comprise at least one chromium silicide selected from among Cr₃Si, Cr₅Si₃, Cr₃Si₂, CrSi, and CrSi₂, and 50% or more of the chromium silicide particles in the alloy coating film is decomposed and solid-solubilized. These particles are classified as high-melting-point compounds, and extremely high in melting point from 1480 to 1770°C. The inventors have found, however, that in the case of co-deposition in a Ni matrix, these particles are easily decomposed at a relatively low heating temperature of 600°C to form a solid solution alloy between the particles and Ni. It has been clarified that the formed Ni-Cr-Si solid solution alloy coating film can significantly delay corrosion progress because Cr in the coating film promotes passivation of the surface under acid corrosive environment or chloride ion corrosive environment, and has a film structure that is less likely to suffer from ingress of a corrosive liquid from grain boundaries because of the extremely small crystal grain diameters and also of the small widths of the grain boundaries. It is to be noted that Cr and Si are effective elements for producing oxidation-resistant protective films in the alloy coating film, and in the case of iron and steel components with the alloy coating film formed according to the present invention, it has been found that oxidation of the coating film and base material is significantly delayed even under the environment of air heating at 1000°C.

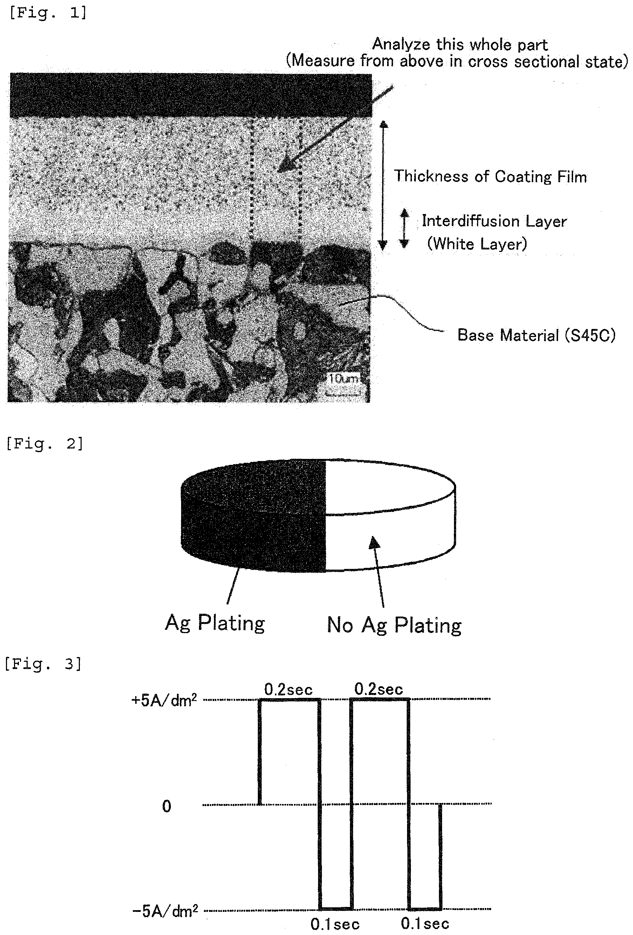

In addition, the formation of a diffusion layer at the interface between the plating film and the base material is critically important in the sense that firm adhesion is developed, and in particular, in the case of forming the alloy coating film according to the present invention on an iron base material, the inventors have found that when chromium silicide particles are decomposed and solubilized in the solid by a heat treatment, an interdiffusion layer mainly composed of Ni and Cr as plating film constituents and Fe as a base constituent (a portion of the alloy coating film) can be formed under the same heating condition to be approximately 10 times as thick as compared with a case without the chromium silicide particles (Fig. 1: a photograph of a cross section of an alloy coating film according to Example 9 of the present invention).

The corrosion-resistant alloy coating film according to the present invention can be formed by applying, for example, [composite plate processing + heating treatment] to a machined item, and it is also possible to carry out bending work and press forming after [composite plate processing + heating treatment], due to the high adhesion between the coating film and the base material.

More specifically, the present invention provides the following (1) to (3).
(1) An iron base material having a corrosion-resistant alloy coating film formed on the surface thereof, wherein the alloy coating film contains Ni, Cr, and Si as essential constituents, further where the content ratio of Ni is 10 to 98 wt% on the basis of the total weight of the film, the content ratio of Cr is 1 to 50 wt% on the basis of the total weight of the film, the content ratio of Si is 0.1 to 30 wt% on the basis of the total weight of the film, and the film has a thickness of 0.1 to 1000 µm, and
   wherein supply source of Cr and Si in the alloy coating film is chromium silicide particles comprising at least one chromium silicide selected from among Cr₃Si, Cr₅Si₃, Cr₃Si₂, CrSi, and CrSi₂ and 50% or more of the chromium silicide particles in the alloy coating film is decomposed and solid-solubilized.
(2) A method for producing an iron base material with a corrosion-resistant alloy coating film formed on the surface thereof, the alloy coating film containing Ni, Cr, and Si as essential constituents, further where the content ratio of Cr is 1 to 50 wt% on the basis of the total weight of the film, the content ratio of Si is 0.1 to 30 wt% on the basis of the total weight of the film, and the alloy coating film has a thickness of 0.1 to 1000 µm, the method including the following steps:
   (i) a composite plate processing with a Ni solution containing chromium silicide particles, wherein a composite plating film is formed and, subsequently
   (ii) a step of forming the corrosion-resistant alloy coating film by applying a heat treatment to the composite plating film,
   wherein in the composite plating film at least one chromium silicide particle selected from among Cr₃Si, Cr₅Si₃, Cr₃Si₂, CrSi, and CrSi₂ is co-deposited in a Ni matrix, and
   wherein the step (ii) is carried out at a temperature of 600 °C or higher to decompose and provide a solid solution of 50% or more of the chromium silicide particles co-deposited in the Ni matrix.
(3) A separators for a fuel cell, a damper of an incinerator, a duct, a cylinder for an injection molding machine, a cylinder for an extrusion molding machine, a ship component, parts of oceanic and bridge structures, a chemical plant component, a tank for acid cleaning, an exterior panel for an automobile, a pump shaft, a casing, an impeller, a rotor, a turbine shaft, a turbine blade, a rotating plate, a current plate, a screw, piping, a valve, a nozzle, a bolt or a nut, or a distributer or a heating element or an evaporation can body of a stainless-steel evaporative concentrator, which includes the iron base material according to *inter alia* the above (1).

Preferred embodiments of the iron base material and the method for producing an iron base material are subject of the dependent claims.

### Advantageous effect of the invention

The adoption of the highly corrosion-resistant alloy coating film and forming method therefor according to the present invention allows surface modifications of inexpensive materials, thereby resulting in a significant economic benefit. In addition, the materials are much less likely to be damaged or exchanged due to corrosion or high-temperature oxidation, thus leading to reduced discharge of industrial waste.

### Brief Description of Drawings

Fig. 1 is a photograph of a cross section of an alloy coating film according to the present invention.
Fig. 2 is a test piece used in a corrosion resistance test in an example.
Fig. 3 shows the PR electrolytic waveform as used in Example 3.
Fig. 4 is a flow diagram showing the treatment process for forming coating films as employed in Examples 2 to 11 and Comparative Examples 3 to 6.

### Description of Embodiments

A corrosion-resistant alloy coating film and a forming method therefor according to the present invention will be described in detail below.

### <<Applied Material>>

The material applied in the present invention is an iron base material. It is possible to apply the present invention to, for example, to cold-rolled steel sheets (SPC materials), hot-rolled steel sheets (SPH materials), roller steels for general structure (SS materials), carbon steels (SC materials), various types of alloy steels, stainless steels, etc., and the shape of the material is not to be considered particularly limited, such as, besides plate materials, rods, strips, tubes, wires, cast and wrought products, and bearings.

### <Iron Base Material>

In the case of an iron base material, a heat treatment causes Ni and Cr mainly derived from a plating film and Fe derived from the base material to form an interdiffusion layer at the interface between the base material and the coating film, thus allowing firm adhesion to be developed. In this case, this interdiffusion layer also serves as a portion of the coating film. It is to be noted that the iron base material according to the present invention refers to a metallic material in which the proportion of iron is 50 wt% or more among the constituent elements.

### <<Method for Forming Corrosion-Resistant Alloy Coating Film>>

### <1. Step of Cleaning Material Surface>

The surface of the iron base material can be subjected to a degreasing treatment in advance for cleaning, if necessary. The method for degreasing is not particularly limited, and the method of solvent degreasing, water degreasing, or emulsion degreasing can be adopted. In addition, there is no harm in carrying out various types of acid cleaning treatments after the degreasing, if necessary.

### <2. Step of Forming Corrosion-Resistant Alloy Coating Film>

The method for forming a Ni-Cr-Si alloy coating film in the present invention is not to be considered particularly limited. For example, while favorable alloy coating films can be obtained even by carrying out a heat treatment with Ni foil laminated on the surface of an iron base material, and chromium silicide particles interposed therebetween, a method is preferred in which a liquid of chromium silicide particles dispersed in a Ni aqueous solution is used to carry out a composite plate processing, and further subjected to a heat treatment to form an alloy coating film, in terms of formation of stable thin films on articles in various shapes by a relatively simple method. A method for forming a corrosion-resistant alloy coating film by a composite plating treatment will be described in more detail below.

### {2-1. Composite Plating Step}

### (2-1-1. Approach for Forming Plating Film)

Electroplate processing with the use of a direct-current power supply or a pulsed power supply, PR plate processing, and electroless plate processing with the use of a reductant are conceivable for the composite plate processing, and able to form favorable plating films in each case.

### (2-1-2. Pretreatment for Plating)

In addition, it is also possible to carrying out, as a pretreatment for the composite plate processing, a Ni strike treatment in order to increase the adhesion between the plating film and the base material, or a catalyzing treatment of adsorbing palladium or the like for the purpose of settlement of metallic nuclei in the case of the electroless plate processing.

### (2-1-3. Condition for Ni Solution)

While the Ni solution for use as a plating solution in the present invention is not to be considered particularly limited as long as there are Ni ions or Ni complex ions in the solution, an aqueous solution is preferred in terms of ease of handling. It is possible to use plating solutions with nickel chloride, nickel sulfate, nickel sulfamate, or the like as a main raw material, and if necessary, reductants, pH buffers, complexing agents, additives, dispersing agents, etc. can be added.

### (2-1-4. Reductant)

Hypophosphites, phosphites, boron hydride compounds, dimethylamine borane, hydrazine, formalin, titanium trichloride, etc. can be used as the reductant.

### (2-1-5. pH Buffer)

Monocarboxylic acids such as formic acid, acetic acid, and propionic acid, or alkali salts thereof; dicarboxylic acids such as oxalic acid, succinic acid, and malonic acid, or alkali salts thereof; oxycarboxylic acids such as glycolic acid, tartaric acid, and citric acid, or alkali salts thereof; inorganic acids such as boric acid, carbonic acid, and sulfurous acid, or alkali salts thereof, etc. can be used as the pH buffer.

### (2-1-6. Complexing Agent)

Citric acid, hydroxyacetic acid, lactic acid, oxalic acid, succinic acid, malonic acid, salicylic acid, glycine, phthalic acid, tartaric acid, malic acid, tartronic acid, gluconic acid, cyanic acid, thiocyanic acid, or alkali salts thereof, ammonia, etc. can be used as the complexing agent for making metal ions stable in the plating solution.

### (2-1-7. Additive)

Polyethylene glycol and saccharine; water-soluble sulfur-containing compounds as typified by p-toluenesulfonamide, 1,5-naphthalene disulfonate, 1,3,6-naphthalene trisulfonate, and lauryl sulfate; unsaturated bond-containing organic compounds as typified by 1,4-butanediol, propargylalcohol, coumarin, and ethylene cyanohydrin; chlorides such as sodium chloride and potassium chloride; etc. can be used as the additives for the purpose of smoothing or glazing plating films, preventing the generation of pits, relaxing internal stress, improving anode solubility, etc.

### (2-1-8. Dispersing Agent)

In addition, the dispersing agent added in the plating solution, and adsorbed onto the surfaces of chromium silicide particles and other particles can prevent the aggregation of the particle with each other, and stably disperse the particles in the solution. Cationic surfactants, anionic surfactants, ampholytic surfactants, non-ionic surfactants, etc. can be used as the dispersing agent.

### (2-1-9. Type of Coexistent Metal Ion)

In addition, there are not any problems even when the treatment liquids in the electroplate processing and the electroless plate processing contain metal ions or metal complex ions of chromium, manganese, iron, cobalt, copper, zinc, ruthenium, rhodium, palladium, silver, cadmium, indium, tin, rhenium, osmium, iridium, platinum, gold, mercury, thallium, lead, titanium, vanadium, yttrium, zirconium, niobium, molybdenum, hafnium, tantalum, tungsten, aluminum, gallium, germanium, antimony, bismuth, etc. , while containing nickel as essential constituent.

### (2-1-10. Plating Condition)

The conditions for the electroplate processing and the electroless plate processing are not to be considered particularly limited. There are not any problem with the concentrations of the respective constituents including Ni ions, the temperatures of the plating liquids, the plating time, pH, current density, dispersed particle concentrations, stirring conditions, the type and concentration of the reductant, as long as Ni can be deposited as a matrix.

### (2-1-11. Ni Concentration)

The Ni ion concentration in the Ni solution is not to be considered particularly limited, but preferably falls within the range of 0.3 to 600 g/L. More preferably, the concentration falls within the range of 6 to 180 g/L. It is difficult to form proper plating films at the concentration lower than 0.3 g/L, whereas the concentration in excess of 600 g/L is an economic waste because a Ni compound is deposited in the liquid in excess of the limit for being stably soluble as Ni ions.

### (2-1-12. Supply Source of Cr and Si)

The supply source of Cr and Si is particles of at least one chromium silicide selected from among Cr₃Si, Cr₅Si₃, Cr₃Si₂, CrSi, and CrSi₂. Chromium silicide is used because of its dispersion stability in the solution, and ease of decomposition, solid solubilization, and alloying in heat treatment after the composite plate processing.

### (2-1-13. Particle Size of Chromium Silicide Particle)

While the particle sizes of the chromium silicide particles are not to be considered particularly limited, the particle sizes of particles co-deposited in the Ni matrix are preferably 100 µm or less, more preferably 20 µm or less, and further preferably 5 µm or less, in longer diameter. If the co-deposited particles exceed 100 µm in longer diameter, the decomposition and solid solubilization in the nickel matrix will require a longer period of time, thus decreasing the productivity, which is not economically preferable. It is to be noted that the lower limit is not particularly limited, but for example, 0.1 µm.

### (2-1-14. Dispersion Amount of Chromium Silicide Particle)

The concentration of chromium silicide dispersed in the Ni solution is not to be considered particularly limited, but preferably falls within the range of 10 to 2000 g/L. The concentration more preferably falls within the range of 50 to 1500 g/L, and further preferably within the range of 100 to 1000 g/L. The dispersed concentration less than 10 g/L makes it difficult to contain 1 wt% or more of Cr, whereas the case in excess of 2000 g/L makes stable dispersion difficult because of the excessive amount of particles with respect to the solution.

### (2-1-15. Mix of Other Disperse Particle)

Furthermore, in the present invention, there is no harm in adding chromium silicide particles and other disperse particles to the plating solution for simultaneous deposition in the matrix. The co-deposition of particles such as, for example, Al₂O₃, Cr₂O₃, Cr₃C₂, TiO₂, TiN, ZrO₂, ZrC, Si₃N₄, WC, BN, and diamond makes it possible to develop not only corrosion resistance, but also multiple functions such as abrasion resistance, water repellency, adhesiveness, and self-lubrication.

### (2-1-16. Plating Bath, Stirring Condition)

The conditions for the plating bath and the stirring conditions in the plating bath are not to be considered particularly limited, as long as the method can adequately disperse the chromium silicide particles in the liquid. To give examples, preferred are a liquid circulation method with a pump, a propeller agitation method, an up-flow method, a plate pump method, an air agitation method, a work rotation method, a sediment co-deposition method, a brush plating method, etc.

### {2-2. Heating Step}

### (2-2-1. Heating Temperature (Solid Solubilization Condition for Chromium Silicide))

The chromium silicide particles co-deposited in the Ni matrix is subjected to a heat treatment at a temperature of 600°C or higher for decomposition and solid solubilization, more preferably in the temperature range of 700 to 1300°C, and further preferably in the temperature range of 800 to 1100°C. It is not possible to achieve decomposition or solid solubilization of 50% or more of the chromium silicide particles at lower than 600°C, whereas the 50% or more decomposition and solid solubilization can be achieved at 600 to 700°C, but uneconomically require long periods of time. In addition, while it is possible to achieve the decomposition and solid solubilization at even over 1300°C, high energy is required for the heating, which is not preferable economically.

### (2-2-2. Heating Time (Solid Solubilization Condition for Chromium Silicide))

The heating time for the decomposition and solid solubilization of the chromium silicide particles is not to be considered particularly limited. The preferred heating time falls, depending on the heating temperature, within the range of 0.5 seconds to 48 hours, more preferably within the range of 1 second to 24 hours. The decomposition and solid solubilization of the chromium silicide particles are inadequately progressed for shorter than 0.5 seconds. In addition, while it is possible to achieve the decomposition and solid solubilization even for more than 48 hours, high energy is required for maintaining the temperature, which is not preferable economically.

### (2-2-3. Heating Temperature (in the case of an iron base material))

In the case of using an iron material as a base material and forming a corrosion-resistant alloy coating film on the surface of the material, the heat treatment is preferably carried out at a temperature of 600°C or higher. The heat treatment is more preferably carried out in the temperature range of 700 to 1100°C, and further preferably in the range of 800 to 1000°C. It is not possible to enhance the adhesion at lower than 600°C, because of failing to achieve adequate interdiffusion of Ni derived from the plating film and Fe derived from the base material. In addition, while it is possible to form an interdif fusion layer of Ni and Fe at even over 1100°C, high energy is required for the heating, which results in an economic waste.

### (2-2-4. Heating Time (in the case of an iron base material))

The heating time for forming the interdiffusion layer mainly of Ni and Fe on the surface of the iron base material is not to be considered particularly limited. The preferred heating time falls, depending on the heating temperature, within the range of 0.5 seconds to 48 hours, more preferably within the range of 1 second to 24 hours. The diffusion is inadequately progressed for shorter than 0.5 seconds, and even in the case of more than 48 hours, a diffusion layer is formed, while higher energy is required for maintaining the temperature, which is not preferable economically.

### (2-2-5. Heating Atmosphere)

While the atmosphere for the heating treatment is not to be considered particularly limited, the heat treatment is desirably carried out in any of a vacuum state of 5 × 10⁻² Pa or less, a nitrogen gas atmosphere, an Ar gas atmosphere, a He gas atmosphere, a hydrogen gas atmosphere, or a salt bath at high temperature, for the purpose of promoting the formation of a Ni-Cr-Si alloy.

### (2-2-6. Heating Method)

The heat treatment method is not to be considered particularly limited, and besides heating atmosphere furnaces, molten salt baths, pressurized heat treatments, and electric resistance heat treatments, combinations with induction quenching with the use of high-frequency induction heating can be also adopted.

In particular, when the high-frequency induction heating method is adopted for the iron base material, it is possible to simultaneously develop various types of functions by hardening (strength enhanced) of the steel, as well as the decomposition of the chromium silicide particles, solid solubilization (corrosion resistance imparted), the formation of an interdiffusion layer mainly of Ni and Fe (adhesion imparted), and the amorphous surface of the alloy coating film (corrosion resistance enhanced). In addition, the high-frequency heating has the advantage of being able to shortening the heating time, and is thus effective for base materials with relatively low melting points, such as Al and alloys thereof, Mg and alloys thereof, Cu and alloys thereof, and Zn and alloys thereof.

Furthermore, on members for use under high-temperature environment of 600°C or higher, it is possible to form favorable corrosion-resistant alloy coating films through the use of heat in usage environments, without applying such a heat treatment described above after the composite plate processing.

### <3. Others>

In the method for forming a corrosion-resistant alloy coating film according to the present invention, the treatment process is not particularly limited, and a corrosion-resistant alloy coating film can be formed in the order of: for example, degreasing -> water rinsing -> acid cleaning -> water rinsing -> (Ni strike treatment) -> Ni/chromium silicide composite plating -> heat treatment.

In addition, it is also possible to form a thick composite plating film or a thick alloy coating film in advance, and control the film thickness by polishing after the composite plate processing or after the heat treatment for the purpose of adjusting the dimensions.

### <<Alloy Coating Film>>

### <1. Ratio of Each Constituent>

### (1-1. Ni Content Ratio)

The content ratio of Ni in the corrosion-resistant alloy coating film according to the present invention falls within the range of 10 to 98 wt%, preferably 20 to 90 wt%, and more preferably 30 to 80 wt% on the basis of the total weight of the film. The ratio of less than 10 wt% has the possibility of making it difficult to maintain the solid solution state, thereby inadequately producing corrosion resistance and oxidation resistance. In addition, the ratio in excess of 98 wt% unfavorably decreases the content ratio of Cr or Si, thereby making it difficult to produce adequate corrosion resistance. It is to be noted that in the case of an interdiffusion layer formed, the interdiffusion layer also serves as a portion of the alloy coating film as will be described below. In this case, not only the Ni content ratio but also the Cr content ratio and Si content ratio below can vary between the content ratio in the interdiffusion layer and the content ratio in a layer on the interdiffusion layer. However, the content ratios defined in this specification refer to average values over the entire film (that is, the interdiffusion layer + the layer on the interdiffusion layer).

### (1-2. Cr Content Ratio)

The content ratio of Cr in the corrosion-resistant alloy coating film according to the present invention falls within the range of 1 to 50 wt%, preferably 5 to 40 wt%, and more preferably 10 to 30 wt% on the basis of the total weight of the film. The ratio of less than 1 wt% achieves a small anti-corrosion effect due to passivation of chromium, thereby resulting in difficulty in having adequate resistance under corrosive environment. In addition, the ratio in excess of 50 wt% even produces corrosion resistance, but saturates the effect, and unfavorably decreases the toughness, thereby resulting in difficulty with processing after the heat treatment.

### (1-3. Si Content Ratio)

The content ratio of Si in the corrosion-resistant alloy coating film according to the present invention falls within the range of 0.1 to 30 wt%, preferably 0.5 to 20 wt%, and more preferably 1 to 15 wt% on the basis of the total weight of the film. The ratio of less than 0.1 wt% decreases the anti-corrosion effect and the oxidation-resistance performance, thereby resulting in difficulty in having adequate resistance under corrosive environment or high-temperature environment. In addition, the ratio in excess of 30 wt% even produces corrosion resistance and oxidation resistance performance, but saturates the effect, and unfavorably decreases the toughness, thereby resulting in difficulty with processing after the heat treatment.

### <2. Film Thickness Range>

The thickness of the corrosion-resistant alloy coating film needs to be 0.1 to 1000 µm, which is preferably 5 to 500 µm, and more preferably 10 to 200 µm. It is to be noted that in the case of an interdiffusion layer formed as in the case of the iron material, the interdiffusion layer also serves as a portion of the coating film. More specifically, the film thickness of the corrosion-resistant alloy coating layer refers to a film thickness including the interdiffusion layer. The thickness of less than 0.1 µm decreases the shielding effect against corrosive substances, thereby failing to produce adequate corrosion resistance. In addition, the thickness even in excess of 1000 µm saturates the corrosion-resistance effect, which is an economic waste. The coating film thickness herein refers to "the thickness after the heat treatment", which is not necessarily consistent with the film thickness immediately after the plating. In particular, when a material for interdiffusion of atoms by a heat treatment is adopted as in the case of the iron base material, the interdiffusion layer formed by the heat treatment results in an increase in film thickness from the thickness of the film formed by the composite plate processing.

### <3. Decomposition and Solid Solubility of Chromium Silicide Particles>

In the Ni-Cr-Si alloy coating film according to the present invention, 50% or more of the chromium silicide particles is decomposed and solid-solubilized. Preferably, 80% or more thereof, and further preferably, 95% or more thereof is decomposed and solid-solubilized. In the case of less than 50%, there are many boundaries between the matrix and the undecomposed particles, corrosion is thus more likely to progress from the boundaries, and inadequate corrosion-resistance effect can be achieved. In addition, when 95% or more of the chromium silicide particles is decomposed and solubilized in the solid, the corrosion resistance and the oxidation resistance will be saturated.

### <4. Others>

In the composite plating, there is a possibility that elements such as hydrogen H, boron B, carbon C, nitrogen N, oxygen O, phosphorus P, and sulfur S will be incorporated as impurities in the coating film because of the addition of the reductant, pH buffer, complexing agent, leveling agent, dispersing agent, etc., and the total of these elements is preferably 25 wt% or less, more preferably 15 wt% or less in the coating film.

While the oxygen O may be incorporated by oxidation during the heat treatment in some cases, the oxygen O is linked to Si or Cr in the coating film to form chemically stable SiO₂ or Cr₂O₃, and thus will not significantly decrease the corrosion resistance.

### <<Interdiffusion Layer (in the case of an iron base material)>>

As described previously, an interdiffusion layer of Ni and Fe is formed as a portion of the corrosion-resistant alloy coating film in the case of an iron base material. This interdiffusion layer of Ni and Fe herein is preferably 50 nm or more in thickness, and more preferably 1 µm or more in thickness. Even when the interdif fusion layer is less than 50 nm in thickness, any problem will not be caused in terms of corrosion resistance, but it will be difficult to develop the effect in the case of applying the layer to such items as various types of sliding components, which require the corrosion resistance of the alloy coating film, as well as firm adhesion to the base material. It is to be noted that the upper limit is not particularly limited, but for example, 80% with respect to the coating film thickness. The "Interdiffusion layer" herein according to the present invention refers to a layer formed by coexistence of some of the plating film constituents (for example, Ni, Cr, Si, etc.) with some of the elements (for example, Fe, Al, C, N, etc.) in the iron base material in the alloy coating film, and means a layer in which the (abundance of iron base material elements)/(content of plating film constituent elements + abundance of iron base material elements) is 20 to 80 wt%.

### <<Combination with Other Surface Treatment Film>>

Furthermore, multiple functions can be also developed by the combination with other plating film or surface treatment film, without causing any adverse effects on the heat treatment after the composite plating according to the present invention. For example, it is possible to obtain an alloy coating film that has both excellent corrosion resistance and abrasion resistance at high temperature by, after the composite plating according to the present invention, carrying out a plate processing in a Co aqueous solution of Cr₃C₂ particles dispersed therein, and further carrying out a heat treatment at 900°C for a predetermined period of time.

### «Members to which the Invention is Directed»

The corrosion-resistant alloy coating film according to the present invention is useful for iron base materials as typified by separators for fuel cells, dampers of incinerators, ducts, cylinders for injection molding machines, cylinders for extrusion molding machines, ship components, parts of oceanic and bridge structures, chemical plant components, tanks for acid cleaning, exterior panels for automobiles, pump shafts, casings, impellers, rotors, turbine shafts, turbine blades, rotating plates, flow-regulating plates, screws, piping, valves, nozzles, bolts or nuts, or distributers or heating elements or evaporation can bodies of stainless-steel evaporative concentrators.

As described above, the use of the present invention makes it possible to form a highly corrosion-resistant alloy coating film by a relatively simple method on the surfaces of various types of iron base materials, and the invention can be thus applied in a wide range of applications.

### [Examples]

The advantageous effects of the corrosion-resistant alloy coating film according to the present invention will be specifically described below with reference to examples along with comparative examples. It is to be noted that the iron base materials, degreasing agents, and surface conditioners used in the examples and the agents used for the composite plate processing used in the examples were selected optionally from among commercially available materials and reagents, and are not to be considered to limit practical use of the corrosion-resistant alloy coating film and method for forming the film.

The chromium silicide particles were prepared in such a way that commercially available Cr particles and Si particles were mixed in a carbon crucible for intended compositional ratios, and subjected to solid-phase diffusion in a hydrogen gas atmosphere at 1500°C. Thereafter, if necessary, a stamp mill, a ball mill, a mortar, or the like was used for grinding, thereby providing chromium silicide particles of predetermined particle sizes.

The following two types of steels were used as materials to be treated, except for in Comparative Example 1 and Comparative Example 2.
- For evaluation of "Coating Film Thickness", "Interdiffusion Layer Thickness", "Solid Solubility of Chromium Silicide Particles", "Corrosion Resistance", "Oxidation Resistance", and "Constituent Content in Coating Film"
- > Carbon Steel for machine structural use (JIS: S45C, Φ30 × 4 mm in thickness)
- For evaluation of "Adhesion after working"
- > Cold-Rolled Steel Sheet SPCC (JIS: G 3141, 150 in length × 70 in width × 0.5 mm in thickness)

The plate other than the central section of Φ30 mm was subjected to insulating masking both on the front and back sides.

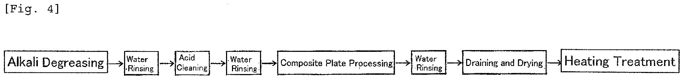

In Examples 2 to 11 and Comparative Examples 3 to 6, coating films were formed in accordance with the treatment process shown in Fig. 4.

The treatment conditions for each step were implemented by the following methods, unless otherwise noted.

For the alkali degreasing, with the use of FINECLEANER E6400 (from Nihon Parkerizing Co. , Ltd.), an aqueous solution thereof diluted to 2 wt% with tap water was heated up to 60°C, and the materials to be treated were then immersed for 10 minutes in the solution. For the acid cleaning, a 5 wt% sulfuric acid aqueous solution used was heated up to 25°C, and the materials to be treated were then immersed for 1 minute in the solution. For the composite plate processing, a direct-current power-supply unit was used to form a Ni-based composite plating film, with the material to be processed as a cathode and a Ni plate as anode. In addition, if necessary, hydrochloric acid or sodium hydroxide was used for the pH adjustment of the composite plate processing liquid. For the draining and drying, an electric oven was used at 80°C for 10 minutes.

The test pieces with the coating films formed, which were obtained in the examples and comparative examples, were evaluated by the following methods for the thickness of the coating film, the thickness of the interdiffusion layer, the solid solubility of the chromium silicide particles, the constituent content in the coating film, the corrosion resistance, and the workability. It is to be noted that the phrase "after the surface treatment" means the state after carrying out the plate processing and the heat treatment in the following description.

### "Thickness of Coating Film"

A cross section of the S45C test piece after the surface treatment was observed with the use of a scanning electron microscope (SEM) to figure out the thickness of the coating film.

### "Thickness of Interdiffusion Layer"

A cross section of the S45C test piece after the surface treatment was observed with the use of the SEM to figure out the thickness of, as an interdiffusion layer, the white layer part below the coating film.

### "Solid Solubility of Chromium Silicide Particles"

The surface of the S45C test piece before and after the heat treatment was subjected to measurement with the use of an X-ray diffraction analyzer (X'Per-MPD) from PHILIPS. With the use of Cu-Kα radiation for the X-ray source, the measurement was made at 45 kV and 40 mA. The solid solubility of the chromium silicide particles was calculated from the diffraction intensity ratios for each chromium silicide particle between before and after the heat treatment. More specifically, the solid solubility was regarded as 100% when the diffraction attributed to the particles was not found after the heat treatment.

### "Constituent Content in Coating Film"

On a cross section (entirely in the depth direction) of the coating film of the S45C test piece after the surface treatment, quantitative analysis of detected elements was carried out with the use of a scanning electron microscope/energy dispersive X-ray analyzer ((SEM JSM-6490/EDAX EDS Genesis XM2) from JEOL Ltd. With the use of a tungsten thermionic emission electron gun for electron beams, irradiation with a beam diameter of 60 µmφ at an acceleration voltage of 15 kV was carried out, and detected by an Si semiconductor detector. The intensity of the detected characteristic X-ray was translated to a quantitative value with the use of a simple quantitation method (ZAF method). More specifically, first, the device was used to carry out a qualitative analysis, and the content ratios of the detected elements were calculated. As shown in Fig. 1, the measurement was made from above in the cross sectional state. It is to be noted that the content ratios of elements in a certain section were measured, and the values were regarded as "Content of Each Constituent with respect to Total Weight", because the film is considered to have the same state even on the right side and left side distant from the dotted frame.

### "Corrosion Resistance"

For the S45C test piece after the surface treatment, a half of the total area was subjected to insulating masking, whereas electrolytic Ag plating of 20 µm in thickness was formed on the other half of the area. After completing the formation of the Ag plating, the test piece was subjected to water rinsing, draining and drying, and the removal of the masking material, and used in a corrosion resistance test (see Fig. 2).

The test piece was immersed for 10 minutes in aqua regia at an initial temperature of 30°C, which was obtained as a mixture at a ratio of 68% nitric acid : 35% hydrochloric acid = 1 : 3 (volume%). After the immersion for 10 minutes, the test piece was subjected to water rinsing and draining and drying, and cut. A cross section of the cut test piece was observed with the use of the SEM to figure out the thickness of the coating film. The coating film under the Ag plating was not corroded by the aqua regia, due to the protective effect of Ag, and thus regarded as an initial film thickness (a). In addition, a film thickness (b) of the part subjected to no Ag plating was also measured, and the reduction (a-b) in coating film thickness was obtained to evaluate corrosion resistance. Therefore, this numerical value being smaller means favorable corrosion resistance.

### "Oxidation Resistance"

The S45C test piece after the surface treatment was heated at 1000°C for 24 hours in the air atmosphere with the use of an electric muffle furnace to measure the increase by oxidation. When the oxidized scale is not peeled, the smaller increase by oxidation means favorable oxidation resistance.

### "Adhesion after working"

The SPCC sheet after the surface treatment was heated at 300°C for 1 minute in the air atmosphere, then immediately water-cooled, and subjected to a bending test for evaluating the adhesion after working. This test piece was interposed in a vise for 70 mm in the length direction × 70 mm in the width direction, and subjected to bending work by 90° for 0.3 seconds so that the part with the coating film formed just served as a concave part and a convex part. The part subjected to the bending work was observed under a metallograph to confirm the presence or absence of peeling or cracking of the coating film. The evaluation was determined on the basis of the following criteria.

### (Evaluation Criteria)

○: neither cracking nor peeling
Δ: cracking generated (no peeling film)
×: peeling film generated

### (Example 1)

The test piece completed up to the acid cleaning -> water rinsing was subjected to draining and drying, Cr₃Si particles with a median diameter: 1 µm on a volumetric basis were placed uniformly at a ratio of 5 g/m² on the test piece, and coated thereon with Ni foil of 8 µm in thickness. Furthermore, a vacuum furnace was used for 2.5 hours under the conditions of 1 × 10⁻⁵ Pa and 900°C, while applying a pressure under the condition of 10 kg/cm², and furnace cooling was directly carried out.

### (Example 2)

The test piece completed up to the acid cleaning -> water rinsing was immersed in the following composite plating solution (1), and with the sheet to be treated as a cathode and a Ni sheet as an anode, a direct-current power-supply unit was used for electrolysis at a current density of 10 A/dm² for 60 minutes to form a composite plating film on the sheet to be treated. The heat treatment after the composite plate processing was carried out for 3 hours under the conditions of 1 × 10⁻³ Pa and 900°C with the use of a vacuum furnace, and furnace cooling was directly carried out.

### Composite Plating Solution (1)

### <Liquid Component>

- Nickel Sulfamate 500g/L
- Sodium Chloride 10g/L
- Boric Acid 35g/L
- CrSi₂ 500 g/L (Median Diameter on Volumetric Basis: 40 µm)

### <pH> <Temperature> <Agitation>

### 4.5 60°C Sediment Co-deposition Method

### (Example 3)

The test piece completed up to the acid cleaning -> water rinsing was immersed in the following composite plating solution (2), and with the sheet to be treated as a cathode and a Ni sheet as an anode, a negative-waveform PR pulse method as shown in Fig. 3 was used for electrolysis for 2 hours to form a composite plating film on the sheet to be treated. The heat treatment after the composite plate processing was carried out for 2 hours under the conditions of an Ar gas atmosphere and 900°C, and furnace cooling was directly carried out.

### Composite Plating Solution (2)

### <Liquid Component>

- Nickel Sulfate Hexahydrate 200g/L
- Nickel Chloride Hexahydrate 50g/L
- Boric Acid 25g/L
- CrSi₂ 20 g/L (Median Diameter on Volumetric Basis: 10 µm)
- CrSi 20 g/L (Median Diameter on Volumetric Basis: 12.5 µm)

### <pH> <Temperature> <Agitation>

### 4.0 55°C Propeller Agitation Method

### (Example 4)

The test piece completed up to the acid cleaning -> water rinsing was immersed in the following composite plating solution (3), and with the sheet to be treated as a cathode and a Ni sheet as an anode, a direct-current power-supply unit was used for electrolysis at a current density of 10 A/dm² for 20 minutes to form a composite plating film on the sheet to be treated. The heat treatment after the composite plate processing was carried out for 12 hours under the conditions of a nitrogen gas atmosphere and 850°C, and furnace cooling was directly carried out.

### Composite Plating Solution (3)

### <Liquid Component>

- Nickel Sulfamate 500g/L
- Nickel Chloride Hexahydrate 50g/L
- Boric Acid 30g/L
- Saccharine Sodium 5g/L
- 1,4-Butanediol 100mg/L
- Cr₃Si 1200 g/L (Median Diameter on Volumetric Basis: 1 µm)

### <pH> <Temperature> <Agitation>

### 4.5 60°C Up-Flow Method

### (Example 5)

The test piece completed up to the acid cleaning -> water rinsing was immersed in the following composite plating solution (4), and with the sheet to be treated as a cathode and a Ni sheet as an anode, a direct-current power-supply unit was used for electrolysis at a current density of 10 A/dm² for 120 minutes to form a composite plating film on the sheet to be treated. The heat treatment after the composite plate processing was carried out for 36 hours under the conditions of 1 × 10⁻⁵ Pa and 680°C with the use of a vacuum furnace, and furnace cooling was directly carried out.

### Composite Plating Solution (4)

### <Liquid Component>

- Nickel Sulfamate 500g/L
- Nickel Chloride Hexahydrate 50g/L
- Boric Acid 30g/L
- β-Naphthalenesulfonic Acid
   Formaldehyde Condensate Sodium Salt 500mg/L
- Methyl Alcohol 1g/L
- Cr₅Si₃ 350 g/L (Median Diameter on Volumetric Basis: 2 µm)
- Cr₃Si₂ 350 g/L (Median Diameter on Volumetric Basis: 4.5 µm)

### <pH> <Temperature> <Agitation>

### 3.8 50°C Plate Pump Method

### (Example 6)

The test piece completed up to the acid cleaning -> water rinsing was immersed for 120 minutes in the following composite plating solution (5) to form a composite plating film on the sheet to be treated. The heat treatment after the composite plate processing was carried out for 8 hours under the conditions of a nitrogen gas atmosphere and 820°C, and furnace cooling was directly carried out.

### Composite Plating Solution (5)

### <Liquid Component>

- Nickel Sulfate Hexahydrate 50g/L
- Sodium Hypophosphite Monohydrate 15g/L
- Ammonium Sulfate 65g/L
- Trisodium Citrate Dihydrate 60g/L
- Cr₃Si 350 g/L (Median Diameter on Volumetric Basis: 1.5 µm)
- CrSi₂ 350 g/L (Median Diameter on Volumetric Basis: 2.5 µm)

### <pH> <Temperature> <Agitation>

### 12.5 80°C Air Agitation Method

### (Example 7)

After carrying out up to the composite plate processing under the conditions listed in Example 4 described above, the surface of the test piece was polished to adjust the thickness of the plating film for 4 µm. Next, an induction quenching apparatus was used to allow the piece to reach 1050°C by heating for 3 seconds in a nitrogen gas atmosphere, and immediately water-cooled.

### (Example 8)

After carrying out up to the composite plate processing under the conditions listed in Example 6 described above, immersion was carried out for 3 minutes in a salt bath agent [GS660 : C3 = 95 : 5 (wt%) ] from Parker Netsushori Kogyo Co., Ltd., heated to 850°C. Thereafter, immersion was carried out for 1 minute in a salt bath agent AS140 for cooling from Parker Netsushori Kogyo Co., Ltd., heated to 180°C, and water cooling was further carried out.

### (Example 9)

The test piece completed up to the acid cleaning -> water rinsing was immersed in the following composite plating solution (6), and with the sheet to be treated as a cathode and a Ni sheet as an anode, a direct-current power-supply unit was used for electrolysis at a current density of 5 A/dm² for 45 minutes to form a composite plating film on the sheet to be treated. The heat treatment after the composite plate processing was carried out for 5 hours under the conditions of 1 × 10⁻³ Pa and 900°C with the use of a vacuum furnace, and furnace cooling was directly carried out.

### Composite Plating Solution (6)

### <Liquid Component>

- Nickel Sulfamate 300g/L
- Cobalt Chloride Hexahydrate 150g/L
- Sodium Chloride 10g/L
- Boric Acid 35g/L
- CrSi₂ 400 g/L (Median Diameter on Volumetric Basis: 2.5 µm)

### <pH> <Temperature> <Agitation>

### 4.5 60°C Propeller Agitation

### (Example 10)

After carrying out up to the composite plate processing under the conditions listed in Example 5 described above, a heat treatment was carried out for 24 hours under the conditions of 1 × 10⁻⁵ Pa and 650°C with the use of a vacuum furnace, and furnace cooling was directly carried out.

### (Example 11)

After carrying out up to the composite plate processing under the conditions listed in Example 4 described above, the surface of the test piece was polished to adjust the thickness of the plating film for 4 µm. Next, an induction quenching apparatus was used to allow the piece to reach 880°C by heating for 1 second in a nitrogen gas atmosphere, and immediately water-cooled.

### (Comparative Example 1)

Austenitic stainless steel (JIS: SUS316L, Φ30 × 4 mm in thickness) was immersed for 10 minutes in a 2 wt% aqueous solution of the alkali degreasing agent, FINECLEANER E6400, heated to 60°C, and subjected to water rinsing, and draining and drying. Thereafter, a half of the total area was subjected to insulating masking, whereas electrolytic Ag plating of 20 µm in thickness was formed on the other half of the area. Then, the test piece was subjected to water rinsing, draining and drying, and the removal of the masking material, and used in a corrosion resistance test. After the completion of the corrosion resistance test, the observation of a cross section under an SEM was made to figure out the reduction in the thickness of the part subjected to no Ag plating.

### (Comparative Example 2)

A material corresponding to hastelloy C-22 as a Ni base alloy (from Mitsubishi Materials Corporation, 30 mm square, 3 mm in thickness) was immersed for 10 minutes in a 2 wt% aqueous solution of the alkali degreasing agent, FINECLEANER E6400, heated to 60°C, and subjected to water rinsing, and draining and drying. Next, a heat treatment was carried out for 2.5 hours under the conditions of a nitrogen gas atmosphere and 900°C, and furnace cooling was directly carried out (assuming the heat history of the weld zone). Thereafter, a half of the total area was subjected to insulating masking, whereas electrolytic Ag plating of 20 µm in thickness was formed on the other half of the area. Then, the test piece was subjected to water rinsing, draining and drying, and the removal of the masking material, and used in a corrosion resistance test. After the completion of the corrosion resistance test, the observation of a cross section under an SEM was made to figure out the reduction in the thickness of the part subjected to no Ag plating.

### (Comparative Example 3)

The test piece completed up to the acid cleaning -> water rinsing was immersed in the following composite plating solution (7), and with the sheet to be treated as a cathode and a Ni sheet as an anode, a direct-current power-supply unit was used for electrolysis at a current density of 10 A/dm² for 30 minutes to form a composite plating film on the sheet to be treated. The heat treatment after the composite plate processing was carried out for 2 hours under the conditions of an Ar gas atmosphere and 900°C, and furnace cooling was directly carried out.

### Composite Plating Solution (7)

### <Liquid Component>

- Nickel Sulfate Hexahydrate 200g/L
- Nickel Chloride Hexahydrate 50g/L
- Boric Acid 25g/L

### <pH> <Temperature> <Agitation>

### 4.0 55°C Propeller Agitation Method

### (Comparative Example 4)

After carrying out up to the composite plate processing under the conditions listed in Example 4 described above, the surface of the test piece was polished to adjust the thickness of the plating film for 4 µm. Next, an electric muffle furnace was used to heat the test piece for 48 hours in the air atmosphere at 1000°C, and furnace cooling was directly carried out.

### (Comparative Example 5)

After carrying out up to the composite plate processing under the conditions listed in Example 4 described above, the surface of the test piece was polished to adjust the thickness of the plating film for 4 µm. Next, with the use of a vacuum furnace, the test piece was subjected to a heat treatment for 30 seconds under the conditions of 1 × 10⁻³ Pa and 900°C, and furnace cooling was directly carried out. Thereafter, the surface of the test piece was again polished to adjust the thickness of the plating film for 0.05 µm.

### (Comparative Example 6)

The test piece completed up to the acid cleaning -> water rinsing was immersed in the following composite plating solution (8), and with the sheet to be treated as a cathode and a Ni sheet as an anode, a direct-current power-supply unit was used for electrolysis at a current density of 10 A/dm² for 60 minutes to form a composite plating film on the sheet to be treated. The heat treatment after the composite plate processing was carried out for 5 hours under the conditions of 1 × 10⁻³ Pa and 900°C with the use of a vacuum furnace, and furnace cooling was directly carried out.

### Composite Plating Solution (8)

### <Liquid Component>

- Nickel Sulfamate 500g/L
- Sodium Chloride 10g/L
- Boric Acid 35g/L
- Cr₂O₃ 500 g/L (Median Diameter on Volumetric Basis: 1 µm)

### <pH> <Temperature> <Agitation>

### 4.5 60°C Propeller Agitation Method

Tables 1 and 2 show the constituent content ratio, the alloy coating film thickness, the thickness of the interdiffusion layer, the solid solubility of the chromium silicide particles, the grain size (longer diameter) of the co-deposited chromium silicide particles, and the evaluation results for corrosion resistance, oxidation resistance, and adhesion after working, for the coating films obtained in the examples and comparative examples (it is to be noted that Comparative Examples 1 and 2 were evaluated only for corrosion resistance, thus without making any comprehensive evaluation). The alloy coating film thickness in Table 1 herein refers to a value also including the interdiffusion layer when the interdif fusion layer is formed. In addition, the co-deposited particle size includes the minimum and maximum particle sizes which can be confirmed in the range of " (vertical) plating film thickness × (horizontal) 100 µm" square observed in the cross-section observation before the heat treatment. It is to be noted that the sizes in Example 7, Example 11, and Comparative Example 4 refer to measurement results before the polishing.

The alloy coating films obtained in Examples 1 to 9 all have favorable corrosion resistance, oxidation resistance, and adhesion after working. In addition, the alloy coating film obtained in Example 10 is somewhat inferior in corrosion resistance because of the low solid solubility of the chromium silicide particles, but has excellent oxidation resistance and adhesion after working. Furthermore, the alloy coating film obtained in Example 11 is somewhat inferior in adhesion after working because of no interdiffusion layer formed, but has excellent corrosion resistance and oxidation resistance.

The SUS316L according to Comparative Example 1 and the hastelloy C-22 according to Comparative Example 2 are generally considered highly favorable in terms of corrosion resistance, but inferior in corrosion resistance to the examples in this test. In Comparative Example 3, the film containing no Cr or Si is inferior in corrosion resistance, oxidation resistance, and adhesion after working as compared with the examples. The coating film according to Comparative Example 4, containing Cr and Ni, however, was affected by oxidation before solid solution alloying progressed adequately, and thus low in content ratios of Cr and Ni, and inferior in corrosion resistance, adhesion after working. In addition, because Fe in the base material was vigorously oxidized during heating, the coating film has a large amount of iron oxide produced therein, and has a portion floated at the interface between the base material and the coating film. The coating film according to Comparative Example 5 failed to achieve adequate corrosion resistance and oxidation resistance, because of the small film thickness. The coating film according to Comparative Example 6 is obviously inferior in performance as compared with the examples, because the film contains no Si with Cr-based particles co-deposited, and because the particles has no solid solution produced by the heat treatment.

From the results mentioned above, it is clear that the corrosion resistance, oxidation resistance, and adhesion after working which are superior as compared with the prior art are achieved by applying the alloy coating film and method for forming the film, which are achieved according to the present invention.

**[Table 1]**

| | Constituent and Content Percentage in Coating Film (wt%) | | | | | Thickness of Coating Film | Thickness of Interdiffusion Layer | Solid Solubility of Chromium Silicide Particle | Particle Size of Co-Deposited Particle |
|---|---|---|---|---|---|---|---|---|---|
| | | | | Other Metal Element | Impurity | | | | |
| | Ni | Cr | Si | | | (µm) | (µm) | (%) | (µm) |
| Example 1 | 60 | 5 | 1 | Fe : 28 | 6 | 10 | 4 | 100 | 0. 1∼4. 2 |
| Example 2 | 47 | 15 | 16 | Fe : 10 | 12 | 140 | 12 | 90 | 0.4∼45 |
| Example 3 | 74 | 3 | 3 | Fe : 16 | 4 | 65 | 12 | 95 | 0.1∼12.8 |
| Example 4 | 54 | 19 | 4 | Fe : 18 | 5 | 50 | 10 | 100 | 0.1∼5.3 |
| Example 5 | 73 | 15 | 5 | Fe : 3 | 4 | 250 | 3 | 75 | 0.1∼6.0 |
| Example 6 | 40 | 16 | 8 | Fe : 18 | 18 | 18 | 5 | 95 | 0.1∼2.7 |
| Example 7 | 58 | 21 | 4 | Fe : 12 | 5 | 4.5 | 0.8 | 100 | 0.1∼5.3 |
| Example 8 | 50 | 17 | 8 | Fe : 11 | 14 | 16 | 3 | 100 | 0.1∼2.7 |
| Example 9 | 28 | 9 | 10 | Fe : 18, Co : 25 | 10 | 60 | 15 | 100 | 0.1∼2.9 |
| Example 10 | 74 | 15 | 5 | Fe : 2 | 4 | 248 | 1.7 | 45 | 0.1∼6.0 |
| Example 11 | 65 | 24 | 5 | - | 6 | 4 | 0 | 55 | 0.1∼5.3 |
| Comparative Example 1 | - | - | - | - | - | - | - | - | |
| Comparative Example 2 | - | - | - | - | - | - | - | - | |
| Comparative Example 3 | 94 | 0 | 0 | Fe : 1 | 5 | 58 | 0.5 | - | |
| Comparative Example 4 | 1.4 | 0.5 | 0.1 | Fe : 65 | 33 | 190 | 0 | 100 | 0.1∼5.3 |
| Comparative Example 5 | 48 | 7 | 1 | Fe : 40 | 4 | 0.08 | 0.06 | 65 | 0.1∼5.3 |
| Comparative Example 6 | 72 | 10 | 0 | Fe : 2 | 16 | 115 | 1.5 | - | 0.1∼2.5 |

**[Table 2]**

| | Corrosion Resistance | Oxidation Resistance | Working Adhesion | Comprehensive Evaluation |
|---|---|---|---|---|
| | Reduction in Film Thickness (µm) | Increase by Oxidation (g/m²) | Bending Test | |
| Example 1 | 2.4 | 9 | ○ | ⊚ |
| Example 2 | 0.6 | 4.6 | ○ | ⊚ |
| Example 3 | 2 | 11.2 | ○ | ⊚ |
| Example 4 | 0.4 | 6 | ○ | ⊚ |
| Example 5 | 2.7 | 14.5 | ○ | ⊚ |
| Example 6 | 1.7 | 7.8 | ○ | ⊚ |
| Example 7 | 0.9 | 6.7 | ○ | ⊚ |
| Example 8 | 0.4 | 3.7 | ○ | ⊚ |
| Example 9 | 1.6 | 5.9 | ○ | ⊚ |
| Example 10 | 4.7 | 27.9 | ○ | ○ |
| Example 11 | 2.9 | 29.6 | Δ :Cracking | ○ |
| Comparative Example | 10.3 | - | - | |
| Comparative Example 2 | 2.7 | - | - | |
| Comparative Example 3 | 5.4 | 656.7 | Δ : Cracking | × |
| Comparative Example 4 | Etched down to base material part | ≧1000 | × : Peeling | × |
| Comparative Example 5 | Etched down to base material part | 270.9 | ○ | × |
| Comparative Example 6 | 10.3 | 472.1 | Δ :Cracking | × |

## Claims

1. An iron base material having a corrosion-resistant alloy coating film formed on a surface thereof, **characterized in that** the alloy coating film contains Ni, Cr, and Si as essential constituents,
further wherein a content ratio of Ni is 10 to 98 wt% on the basis of the total weight of the film, a content ratio of Cr is 1 to 50 wt% on the basis of the total weight of the film, a content ratio of Si is 0.1 to 30 wt% on the basis of the total weight of the film, and the film has a thickness of 0.1 to 1000 µm, and
wherein supply source of Cr and Si in the alloy coating film is chromium silicide particles comprising at least one chromium silicide selected from among Cr₃Si, Cr₅Si₃, Cr₃Si₂, CrSi, and CrSi₂ and 50% or more of the chromium silicide particles in the alloy coating film is decomposed and solid-solubilized.

2. The iron base material according to claim 1, wherein an interdiffusion layer containing Ni and Fe and being of 50 nm or more in thickness is formed as a portion of the corrosion-resistant alloy coating film at an interface with the iron base material.

3. A method for producing an iron base material with a corrosion-resistant alloy coating film formed on a surface thereof, the alloy coating film containing Ni, Cr, and Si as essential constituents, further wherein a content ratio of Cr is 1 to 50 wt% on the basis of the total weight of the film, a content ratio of Si is 0.1 to 30 wt% on the basis of the total weight of the film, and the alloy coating film has a thickness of 0.1 to 1000 µm, the method including the following steps:
(i) a composite plate processing with a Ni solution containing chromium silicide particles, wherein a composite plating film is formed and, subsequently
(ii) a step of forming the corrosion-resistant alloy coating film by applying a heat treatment to the composite plating film, wherein in the composite plating film at least one chromium silicide particle selected from among Cr₃Si, Cr₅Si₃, Cr₃Si₂, CrSi, and CrSi₂ is co-deposited in a Ni matrix, and
wherein the step (ii) is carried out at a temperature of 600 °C or higher to decompose and provide a solid solution of 50% or more of the chromium silicide particles co-deposited in the Ni matrix.

4. The method according to claim 3, wherein an interdiffusion layer being of 50 nm or more in thickness is formed as a portion of the corrosion-resistant alloy coating film at an interface with the iron base material.

5. The method according to claim 3 or 4, wherein the composite plate processing is a method selected from electroplate processing with the use of a direct-current power supply or a pulsed power supply, PR plate processing, and electroless plate processing with the use of a reductant.

6. The method according to any one of claims 3 to 5, wherein
the Ni solution contains Ni, Cr and Si as essential constituents,
the Ni solution comprises dispersed chromium silicide particles selected from at least one among Cr₃Si, Cr₅Si₃, Cr₃Si₂, CrSi and CrSi₂, as a supply source of Cr and Si,
and the particle sizes of the chromium silicide particles are 100 µm or less in longer diameter.

7. The method according to claim 6, wherein the concentration of the chromium silicide particles dispersed in the Ni solution is within the range of 10 to 2000 g/L.

8. A separator for a fuel cell, a damper of an incinerator, a duct, a cylinder for an injection molding machine, a cylinder for an extrusion molding machine, a ship component, parts of oceanic and bridge structures, a chemical plant component, a tank for acid cleaning, an exterior panel for an automobile, a pump shaft, a casing, an impeller, a rotor, a turbine shaft, a turbine blade, a rotating plate, a flow-regulating plate, a screw, piping, a valve, a nozzle, a bolt or a nut, or a distributer or a heating element or an evaporation can body of a stainless-steel evaporative concentrator, which comprises the iron base material according to any one of claims 1 or 2.

## Patentansprüche

1. Material auf Eisenbasis mit einem auf einer Oberfläche davon gebildeten Beschichtungsfilm aus einer korrosionsbeständigen Legierung, **dadurch gekennzeichnet, dass** der Legierungsbeschichtungsfilm Ni, Cr und Si als essentielle Bestandteile enthält,
worin ferner ein Ni-Gehaltsanteil 10 bis 98 Gew.% auf Basis des Gesamtgewichts des Films beträgt, ein Cr-Gehaltsanteil 1 bis 50 Gew.% auf Basis des Gesamtgewichts des Films beträgt, ein Si-Gehaltsanteil 0,1 bis 30 Gew.% auf Basis des Gesamtgewichts des Films beträgt und der Film eine Dicke von 0,1 bis 1000 µm aufweist, und
worin die Bereitstellungsquelle für Cr und Si in dem Legierungsbeschichtungsfilm Chromsilizidpartikel sind, die mindestens ein Chromsilizid, ausgewählt aus Cr₃Si, Cr₅Si₃, Cr₃Si₂, CrSi und CrSi₂, umfassen und 50% oder mehr der Chromsilizidpartikel in dem Legierungsbeschichtungsfilm abgebaut und fest solubilisiert sind.

2. Material auf Eisenbasis gemäß Anspruch 1, worin eine Interdiffusionsschicht, die Ni und Fe enthält und eine Dicke von 50 nm oder mehr aufweist, als Teil des Beschichtungsfilms aus der korrosionsbeständigen Legierung an einer Grenzfläche mit dem Material auf Eisenbasis gebildet ist.

3. Verfahren zur Herstellung eines Materials auf Eisenbasis mit einem auf einer Oberfläche davon gebildeten Beschichtungsfilms aus einer korrosionsbeständigen Legierung, wobei der Legierungsbeschichtungsfilm Ni, Cr und Si als essentielle Bestandteile enthält, worin ferner ein Cr-Gehaltsanteil 1 bis 50 Gew.% auf Basis des Gesamtgewichts des Films beträgt, ein Si-Gehaltsanteil 0,1 bis 30 Gew.% auf Basis des Gesamtgewichts des Films beträgt und der Legierungsbeschichtungsfilm eine Dicke von 0,1 bis 1000 µm aufweist, wobei das Verfahren die folgenden Schritte umfasst:
(i) eine Komposit-Plattierungsbearbeitung mit einer Ni-Lösung, die Chromsilizidpartikel enthält, worin ein Komposit-Plattierungsfilm gebildet wird, und nachfolgend
(ii) einen Schritt zur Bildung des Beschichtungsfilms aus der korrosionsbeständigen Legierung durch Anwendung einer Wärmebehandlung auf den Komposit-Plattierungsfilm, wobei in dem Komposit-Plattierungsfilm mindestens ein Chromsilizidpartikel, ausgewählt aus Cr₃Si, Cr₅Si₃, Cr₃Si₂, CrSi und CrSi₂, gleichzeitig in einer Ni-Matrix abgeschieden ist, und
worin der Schritt (ii) bei einer Temperatur von 600°C oder höher zur Abbau und Bereitstellung einer festen Lösung aus 50% oder mehr der Chromsilizidpartikel, die gleichzeitig in der Ni-Matrix abgeschieden sind, durchgeführt wird.

4. Verfahren gemäß Anspruch 3, worin eine Interdiffusionsschicht mit einer Dicke von 50 nm oder mehr als Teil des Beschichtungsfilms aus der korrosionsbeständigen Legierung an einer Grenzfläche mit dem Material auf Eisenbasis gebildet ist.

5. Verfahren gemäß Anspruch 3 oder 4, worin die Komposit-Plattierungsbearbeitung ein Verfahren ist, das aus einer Galvanisierungsbearbeitung unter Verwendung einer Gleichstromversorgung oder Pulsstromversorgung, einer PR-Plattierungsbearbeitung und einer stromlosen Plattierungsbearbeitung unter Verwendung eines Reduktionsmittels ausgewählt ist.

6. Verfahren gemäß irgendeinem der Ansprüche 3 bis 5, worin
die Ni-Lösung Ni, Cr und Si als essentielle Bestandteile enthält,
die Ni-Lösung dispergierte Chromsilizidpartikel, ausgewählt aus mindestens einem von Cr₃Si, Cr₅Si₃, Cr₃Si₂, CrSi und CrSi₂, als Bereitstellungsquelle für Cr und Si umfasst,
und die Partikelgrößen der Chromsilizidpartikel 100 µm oder weniger in Bezug auf den längeren Durchmesser betragen.

7. Verfahren gemäß Anspruch 6, worin die Konzentration der in der Ni-Lösung dispergierten Chromsilizidpartikel innerhalb des Bereichs von 10 bis 2000 g/L liegt.

8. Separator für eine Brennstoffzelle, Klappe für eine Verbrennungsanlage, Schacht, Zylinder für eine Spritzgussmaschine, Zylinder für eine Strangpressmaschine, Schiffsbauteil, Teile von Meeres- und Brückenkonstruktionen, Bauteil einer Chemiefabrik, Tank für Säurereinigung, Außenbeplankung für ein Automobil, Pumpenwelle, Gehäuse, Laufrad, Rotor, Turbinenwelle, Turbinenschaufel, Drehteller, Strömungsregulierungsplatte, Schraube, Rohrleitung, Ventil, Düse, Bolzen oder Mutter oder Verteiler oder Heizelement oder Verdunstungsgefäßkörper eines Edelstahl-Verdunstungskonzentrators, der/die/das das Material auf Eisenbasis gemäß irgendeinem der Ansprüche 1 oder 2 umfasst.

## Revendications

1. Matériau à base de fer ayant un film de revêtement d'alliage résistant à la corrosion formé sur une surface de celui-ci, **caractérisé en ce que** le film de revêtement d'alliage contient du Ni, du Cr et du Si en tant que principaux constituants,
dans lequel en outre une teneur en Ni est de 10 à 98 % en poids sur la base du poids total du film, une teneur en Cr est de 1 à 50 % en poids sur la base du poids total du film, une teneur en Si est de 0,1 à 30 % en poids sur la base du poids total du film, et le film a une épaisseur de 0,1 à 1000 µm, et
dans lequel une source d'alimentation en Cr et Si dans le film de revêtement d'alliage est constituée par des particules de siliciure de chrome comprenant au moins un siliciure de chrome sélectionné parmi Cr₃Si, Cr₅Si₃, Cr₃Si₂, CrSi et CrSi₂, et 50 % ou plus des particules de siliciure de chrome dans le film de revêtement d'alliage sont décomposés et solubilisés à l'état solide.

2. Matériau à base de fer selon la revendication 1, dans lequel une couche d'interdiffusion contenant du Ni et du Fe et faisant 50 nm ou plus d'épaisseur est formée en tant que partie du film de revêtement d'alliage résistant à la corrosion au niveau d'une interface avec le matériau à base de fer.

3. Procédé pour produire un matériau à base de fer avec un film de revêtement d'alliage résistant à la corrosion formé sur une surface de celui-ci, le film de revêtement d'alliage contenant du Ni, du Cr et du Si en tant que principaux constituants, dans lequel en outre une teneur en Cr est de 1 à 50 % en poids sur la base du poids total du film, une teneur en Si est de 0,1 à 30 % en poids sur la base du poids total du film, et le film de revêtement d'alliage a une épaisseur de 0,1 à 1000 µm, le procédé incluant les étapes suivantes :
(i) un traitement de placage composite avec une solution de Ni contenant des particules de siliciure de chrome, dans lequel un film de placage composite est formé et, par la suite
(ii) une étape de formation du film de revêtement d'alliage résistant à la corrosion en appliquant un traitement thermique au film de placage composite, dans lequel dans le film de placage composite, au moins une particule de siliciure de chrome sélectionnée parmi Cr₃Si, Cr₅Si₃, Cr₃Si₂, CrSi et CrSi₂ est co-déposée dans une matrice de Ni, et
dans lequel l'étape (ii) est effectuée à une température de 600 °C ou plus pour décomposer et fournir une solution solide de 50 % ou plus des particules de siliciure de chrome co-déposées dans la matrice de Ni.

4. Procédé selon la revendication 3, dans lequel une couche d'interdiffusion faisant 50 nm ou plus d'épaisseur est formée en tant que partie du film de revêtement d'alliage résistant à la corrosion au niveau d'une interface avec le matériau à base de fer.

5. Procédé selon la revendication 3 ou 4, dans lequel le traitement de placage composite est un procédé sélectionné parmi un traitement de galvanisation avec l'utilisation d'une alimentation électrique à courant continu ou d'une alimentation électrique à courant pulsé, un traitement de placage sous courant périodiquement inversé PR et un traitement de placage autocatalytique avec l'utilisation d'un réducteur.

6. Procédé selon l'une quelconque des revendications 3 à 5, dans lequel
la solution de Ni contient du Ni, du Cr et du Si en tant que principaux constituants,
la solution de Ni comprend des particules de siliciure de chrome dispersées sélectionnées à partir d'au moins un parmi Cr₃Si, Cr₅Si₃, Cr₃Si₂, CrSi et CrSi₂, en tant que source d'alimentation en Cr et Si,
et les tailles de particule des particules de siliciure de chrome sont de 100 µm ou moins pour le plus long diamètre.

7. Procédé selon la revendication 6, dans lequel la concentration des particules de siliciure de chrome dispersées dans la solution de Ni est dans la plage de 10 à 2 000 g/L.

8. Séparateur pour une pile à combustible, un registre de tirage d'un incinérateur, un conduit, un cylindre pour une machine de moulage par injection, un cylindre pour une machine de moulage par extrusion, un composant de bateau, des éléments de structures océaniques et de pont, un composant d'équipement chimique, un réservoir pour nettoyage à l'acide, un panneau extérieur pour une automobile, un arbre de pompe, un carter, une roue à aubes, un rotor, un arbre de turbine, une ailette de turbine, une plaque tournante, un clapet de régulation de flux, une vis, une tuyauterie, une vanne, une buse, un boulon ou un écrou, ou un diffuseur ou un élément chauffant ou un corps de boîte d'évaporation d'un concentrateur à évaporation en acier inoxydable, qui comprend le matériau à base de fer selon l'une quelconque des revendications 1 ou 2.
